# EUROPÄISCHE PATENTANMELDUNG

(11) **EP 2 059 038 A2**
(43) Veröffentlichungstag der Anmeldung: **13.05.2009**
(21) Anmeldenummer: 08450175.8
(22) Anmeldetag: 07.11.2008
(51) Int. Cl.: H04N 5/76

(54) **Vorrichtung zum Aufnehmen und gleichzeitigen oder zeitversetzten Wiedergeben von Fernsehsendungen sowie Vorrichtung zur Abwicklung von Zusatzdiensten für Fernsehzuschauer**

(30) Priorität: 07.11.2007 AT 17992007
(71) Anmelder: Farbdruck GmbH, A-1210 Wien (AT)
(72) Erfinder: Falk, Noah, A-1190 Wien (AT)
(74) Vertreter: Keschmann, Marc

(57) **Zusammenfassung**

Bei einer Vorrichtung (1) zum Aufnehmen und gleichzeitigen oder zeitversetzten Wiedergeben von Fernsehsendungen, insbesondere einem digitalen Videorekorder, ist wenigstens ein Empfänger für Videosignale, ein Speicher (19) für die empfangenen und ggf. konvertierten und/oder digitalisierten Videosignale und eine Wiedergabeeinrichtung zum Wiedergeben der gespeicherten Videosignale vorgesehen. Weiters umfasst die Vorrichtung eine Kommunikationsschnittstelle (6) zum Empfangen und/oder Senden von Daten, wie z.B. Programminformationen, und eine programmierbare Steuervorrichtung zum Auslösen und/oder Beenden einer Aufnahme und/oder einer Wiedergabe in Abhängigkeit von Benutzereingaben, wobei die Kommunikationsschnittstelle als Kommunikationsschnittstelle (6) eines Mobilfunknetzes (8) ausgebildet ist und einen Speicher, insbesondere ein Teilnehmeridentifikationsmodul (SIM-Karte) des Mobilfunknetzes (8), für eine Benutzer- oder Gerätekennung aufweist.

## Beschreibung

Die Erfindung betrifft eine Vorrichtung zum Aufnehmen von Videoinhalten, insbesondere Fernsehsendungen, und gleichzeitigen oder zeitversetzten Wiedergeben der aufgenommenen Videoinhalte, insbesondere digitaler Videorekorder, umfassend wenigstens einen Empfänger für Videosignale, einen Speicher für die empfangenen und ggf. konvertierten und/oder digitalisierten Videosignale und eine Wiedergabeeinrichtung zum Wiedergeben der gespeicherten Videosignale, weiters umfassend eine von dem wenigstens einen Empfänger für Videosignale gesonderte Kommunikationsschnittstelle zum Empfangen und/oder Senden von Daten, wie z.B. Programminformationen, und eine programmierbare Steuervorrichtung zum Auslösen und/oder Beenden einer Aufnahme und/oder einer Wiedergabe in Abhängigkeit von Benutzereingaben. Weiters betrifft die Erfindung eine Vorrichtung zur Abwicklung von Zusatzdiensten für Fernsehzuschauer.

Vorrichtungen zum Aufnehmen und gleichzeitigen oder zeitversetzten Wiedergeben von Fernsehsendungen, insbesondere digitale Videorecorder der eingangs genannten Art sind bereits in den verschiedensten Ausbildungen bekannt geworden. Besonders beliebt sind digitale Videorecorder mit einer so genannten "Time-Shifting" Funktion. Aufgrund dieser Funktion kann eine Sendung gleichzeitig aufgenommen und wiedergegeben werden. Dadurch kann noch während der Aufnahme einer Sendung damit begonnen werden, sie anzusehen. Wenn man während des Ansehens einer Fernsehsendung zum Beispiel durch einen Telefonanruf gestört wird, kann die Wiedergabe der Sendung durch Aufrufen der Time-Shifting Funktion unterbrochen werden; die Aufzeichnung der Sendung wird im Hintergrund jedoch fortgesetzt. Die Wiedergabe der Sendung kann zu einem gewünschten späteren Zeitpunkt an der Stelle fortgesetzt werden, an welcher sie unterbrochen wurde. Während der weiteren Wiedergabe kann beliebig vor- und zurückgespult werden und der Benutzer kann gewünschten falls durch entsprechendes Vorwärtsspringen in der Aufzeichnung wieder in die Lifesendung einsteigen.

Digitale Videorecorder dieser Art sind beispielsweise aus den Dokumenten US 5,241,428 und EP 1101356 A1 bekannt geworden.

Fernsehgeräte und Videorecorder können zum Empfang von Programminformationen über das Fernsehsignal ausgestattet sein. Die Programminformationen können in herkömmlicher Weise über den Teletextdienst oder als Teil eines digitalen Fernsehsignals in Form einer elektronischen Programmzeitschrift (EPG) empfangen werden. Mit Hilfe der elektronischen Programmzeitschrift kann das laufende und das kommende Fernsehprogramm am Fernsehgerät angezeigt werden. Aufgrund der Integration mit dem Empfangsgerät lässt sich aus der elektronischen Programmzeitschrift heraus das Programm umschalten oder die Aufnahme einer ausgewählten Sendung programmieren.

Das Übertragen von Programminformationen über Signale, die auf ein analoges Fernsehsignal aufmoduliert oder in ein digitales Signal eingebettet sind, führt einerseits zu einer Beschränkung der zu übertragenden Datenmenge und andererseits dazu, dass ein Zugriff auf diese Übertragungsmöglichkeit lediglich den entsprechenden Sendeanstalten vorbehalten ist. Darüber hinaus ist der Übertragungsweg unidirektional und erlaubt somit keinerlei Interaktivität.

Um diese Nachteile zu vermeiden sind bereits Fernsehempfangsgeräte und Videorecorder bekannt geworden, die über wenigstens eine zusätzliche Kommunikationsschnittstelle verfügen. Über eine derartige zusätzliche Kommunikationsschnittstelle können Daten mit unmittelbar oder unter Zwischenschaltung eines Computernetzwerks angeschlossenen Geräten ausgetauscht werden. Auf diese Art und Weise können beispielsweise Programminformationen erhalten, Nachrichten ausgetauscht oder Videodaten an externe Geräte übertragen werden. Ein Anschluss externer Geräte oder eines Netzwerks an das Fernsehempfangsgerät oder den Videorecorder erfordert in der Regel jedoch eine relativ aufwendige Installation, wie beispielsweise das Installieren von Treibern, Maßnahmen zur Sicherstellung der Übertragungssicherheit und der Vertraulichkeit der übertragenen Daten sowie die Registrierung von Benutzern, die Vergabe von Passwörtern und dergleichen.

Die vorliegende Erfindung zielt nun darauf ab, eine Vorrichtung der eingangs genannten Art dahingehend weiterzubilden, dass die Bedienerfreundlichkeit erhöht und gleichzeitig der Nutzen und die Anwendungsmöglichkeiten für den Anwender verbessert werden. Insbesondere soll die Vorrichtung mit bidirektionalen Kommunikationsmöglichkeiten ausgestattet sein, sodass dem Anwender zusätzlich interaktive Dienste angeboten werden können.

Zur Lösung dieser Aufgabe zeichnet sich die Vorrichtung zum Aufnehmen von Videoinhalten, insbesondere Fernsehsendungen, und gleichzeitigen oder zeitversetzten Wiedergeben der aufgenommenen Videoinhalte der eingangs genannten Art mit einer Kommunikationsschnittstelle zum Empfangen und Versenden von Daten erfindungsgemäß im Wesentlichen dadurch aus, dass die Kommunikationsschnittstelle als Kommunikationsschnittstelle eines Mobilfunknetzes ausgebildet ist und einen Speicher, insbesondere ein Teilnehmeridentifikationsmodul (SIM-Karte) des Mobilfunknetzes, für eine Benutzer- oder Gerätekennung aufweist.

Dadurch, dass der Datenaustausch für die vom Videosignal, insbesondere Fernsehsignal, verschiedenen Daten, wie beispielsweise Programminformationen und dergleichen, über ein Mobilfunknetz erfolgt, können die Vorteile einer drahtlosen Kommunikation ausgenützt werden, wobei sich die Installation und die Inbetriebnahme der erfindungsgemäßen Vorrichtung überaus einfach gestalten. Dem Benutzer steht mit der erfindungsgemäßen Vorrichtung eine Plug-and-Play Lösung zur Verfügung, welche benutzerseitig keinerlei zusätzlichen Installationsaufwand erfordert. Die erfindungsgemäße Vorrichtung muss so wie herkömmliche Geräte lediglich an eine Stromversorgung angeschlossen und mit einer Fernsehantenne oder dem Fernsehanschluss verbunden werden. Die integrierte Kommunikationsschnittstelle des Mobilfunknetzes erfordert keine gesonderte Installation, da erfindungsgemäß ein Speicher für eine Benutzer- oder Gerätekennung bereits integriert ist, beispielsweise in Form eines Teilnehmeridentifikationsmoduls (SIM-Karte) des Mobilfunknetzes. Eine Registrierung bei Zusatzdiensteanbietern kann lediglich durch Bekanntgabe der entsprechenden Benutzer- oder Gerätekennung erfolgen, sodass der Diensteanbieter die Benutzer- oder Gerätekennung dem jeweiligen Benutzer zuordnen kann, um ein gezieltes Adressieren bzw. eine gezielte Zuordnung des entsprechenden Datenverkehrs zu ermöglichen.

Ein weiterer Vorteil der Verwendung einer Kommunikationsschnittstelle eines Mobilfunknetzes liegt darin, dass die einzelnen Benutzerendgeräte über das Mobilfunknetz geortet werden können. Insbesondere kann festgestellt werden, in welcher Zelle des Mobilfunknetzes sich das Benutzerendgerät befindet, wodurch statistische Auswertungen für verschiedene Zwecke möglich werden. Beispielsweise ist es denkbar, dass anbieterseitig eine Auswertung der Benutzeraktivität wie beispielsweise der gesehenen oder aufgenommenen Fernsehsendungen, der in Anspruch genommenen Zusatzdienste und dergleichen hinsichtlich des geografischen Standortes vorgenommen wird.

Weiters können aufgrund der integrierten Benutzerkennung anbieterseitig statistische Auswertungen über die von den einzelnen Benutzern favorisierten Sendungen und dergleichen vorgenommen werden, sodass einzelnen Benutzern aufgrund dieser statistischen Daten dem Benutzerprofil entsprechende Sendungen zur Aufnahme vorgeschlagen werden können.

Gemäß einer bevorzugten Weiterbildung der erfindungsgemäßen Vorrichtung ist die Kommunikationsschnittstelle zum Empfangen bzw. Versenden von Daten unter Verwendung des GSM-, GPRS-, HSDPA- oder UMTS-Standards ausgebildet. Durch die Verwendung bewährter und weit verbreiteter Standards wird die flächendeckende Benutzung der Kommunikationsschnittstelle ermöglicht, wobei eine entsprechende Datenübertragungsrate sichergestellt ist. Die bevorzugt zur paketvermittelten Datenübertragung ausgebildete Kommunikationsschnittstelle ist hierbei in der Lage, Daten effizient und ohne übermäßige Beanspruchung von Bandbreite zu übertragen, wobei der Datenaustausch vom Benutzer unbemerkt im Hintergrund stattfinden kann, ohne dass jede Datenübertragung benutzerseitig Initialisierungsschritte, eine Benutzeridentifikation oder einen gesonderten Verbindungsaufbau erfordern würde.

Wie bereits erwähnt, können über die Datenverbindung unter anderem Programminformationen empfangen werden, zu welchem Zweck die erfindungsgemäße Ausbildung mit Vorteil dahingehend weitergebildet ist, dass die Kommunikationsschnittstelle zum Empfangen von Programminformationen ausgebildet ist und mit einem Programminformationsspeicher zum Speichern der Programminformationen verbunden ist.

Die im Programminformationsspeicher gespeicherten Programminformationen können dem Benutzer über eine Benutzeroberfläche präsentiert werden, wobei bevorzugt die Möglichkeit einer Vormerkung von Sendungen vorgesehen ist, die der Benutzer aufnehmen möchte. Das aufwändige Programmieren von Aufnahmezeiten und dgl. entfällt auf diese Weise, da die Programmierung von Aufnahmen lediglich durch Anwählen von Sendungen in der Programmübersicht bzw. im Programminformationsspeicher erfolgt. Die Ausbildung ist in diesem Zusammenhang bevorzugt derart weitergebildet, dass der Programmspeicher mit Mitteln zum Kennzeichnen von Programmeinträgen des Programmspeichers verbunden ist und mit der programmierbaren Steuervorrichtung zum Auslösen und/oder Beenden einer Aufnahme wenigstens einer einem gekennzeichneten Programmeintrag entsprechenden Fernsehsendung zusammenwirkt.

Um den Programminformationsspeicher zu aktualisieren ist gemäß einer bevorzugten Weiterbildung vorgesehen, dass die Kommunikationsschnittstelle mit einem Zeitglied verbunden ist, um den Datenaustausch zu definierbaren Zeiten auszulösen.

Auch ein allfälliger Datenaustausch in umgekehrter Richtung, das heißt vom Benutzerendgerät zum Anbieter von Zusatzdiensten kann zu vorgegebenen Zeiten erfolgen. Je nach Anwendungsfall kann der Datenaustausch aber auch zu wechselnden Zeiten bzw. nach einer entsprechenden Übertragungsaufforderung durch den Zusatzdiensteanbieter sinnvoll bzw. erforderlich sein. Zu diesem Zweck ist die Ausbildung bevorzugt derart weitergebildet, dass die Kommunikationsschnittstelle zum Empfangen von Textnachrichten (SMS-Dienst) ausgebildet ist, wobei der Datenaustausch bei Erhalt einer Nachricht definierten Inhalts ausgelöst wird.

Wie bereits erwähnt können mit Hilfe der Kommunikationsschnittstelle Benutzerstatistiken vom Benutzer zum Diensteanbieter übertragen werden und die Ausbildung ist in diesem Zusammenhang bevorzugt derart getroffen, dass ein Speicher zum Aufzeichnen von Benutzereingaben und/oder von der Steuervorrichtung ausgelösten Vorgängen vorgesehen ist, dessen Speicherinhalt über die Kommunikationsschnittstelle versendet wird.

Die über die erfindungsgemäß vorgesehene Kommunikationsschnittstelle abzuwickelnden Zusatzdienste können von der Bestellung von Mahlzeiten, dem Abschließen von Wetten bis zum zur Verfügung Stellen des Zugangs zu Online-Shops und dergleichen reichen. Die erfindungsgemäße Vorrichtung zur Abwicklung von Zusatzdiensten für Fernsehzuschauer weist zu diesem Zweck neben der erfindungsgemäßen Fernsehempfangs- und Aufnahmevorrichtung eine zentrale Recheneinrichtung auf, wobei die Kommunikationsschnittstelle der Fernsehempfangs- und Aufnahmevorrichtung zum Datenaustausch mit der zentralen Recheneinrichtung ausgebildet ist. Die Fernsehempfangs- und Aufnahmevorrichtungen sind somit über das Funknetz mit der zentralen Recheneinrichtung verbindbar.

Bevorzugt ist vorgesehen, dass jeder Fernsehempfangs- und -aufnahmevorrichtung eine eindeutige Teilnehmerkennung zugeordnet ist und die zentrale Recheneinrichtung zum Übersenden von Daten an die der jeweiligen Teilnehmerkennung entsprechende Fernsehempfangs- und -aufnahmevorrichtung über das Mobilfunknetz ausgebildet ist, wodurch eine selektive Adressierung eines einzelnen oder mehrerer Benutzer bei der Datenübertragung möglich ist.

Gemäß einer bevorzugten Weiterbildung ist vorgesehen, dass die zentrale Recheneinrichtung eine zentrale Benutzerdatenbank aufweist, in welcher jeder Benutzerkennung personenspezifische Informationen, wie z.B. Adresse, Alter, Geschlecht und dgl., des jeweiligen Benutzers zugeordnet sind. Eine derartige Ausbildung ermöglicht es, die vom einem bestimmten Benutzerendgerät samt der jeweiligen Benutzerkennung empfangenen Daten dem richtigen Benutzer zuzuordnen und gegebenenfalls die entsprechenden personenspezifischen Informationen, wie z.B. die Adresse, das Alter, Geschlecht und dergleichen des jeweiligen Benutzers aufzurufen und gegebenenfalls weiterzuverarbeiten. In diesem Zusammenhang ist bevorzugt vorgesehen, dass die zentrale Recheneinrichtung Mittel zum Auslesen der Benutzerkennung aus den von der Fernsehempfangs- und -aufnahmevorrichtung empfangenen Daten, Mittel zum Zuordnen der empfangenen Daten zu dem jeweiligen Benutzer und den dem jeweiligen Benutzer in der Datenbank zugeordneten gespeicherten Informationen und zum Auslösen der dem Dateninhalt entsprechenden Benutzeraktion, wie. z.B. einer Produktbestellung, aufweist.

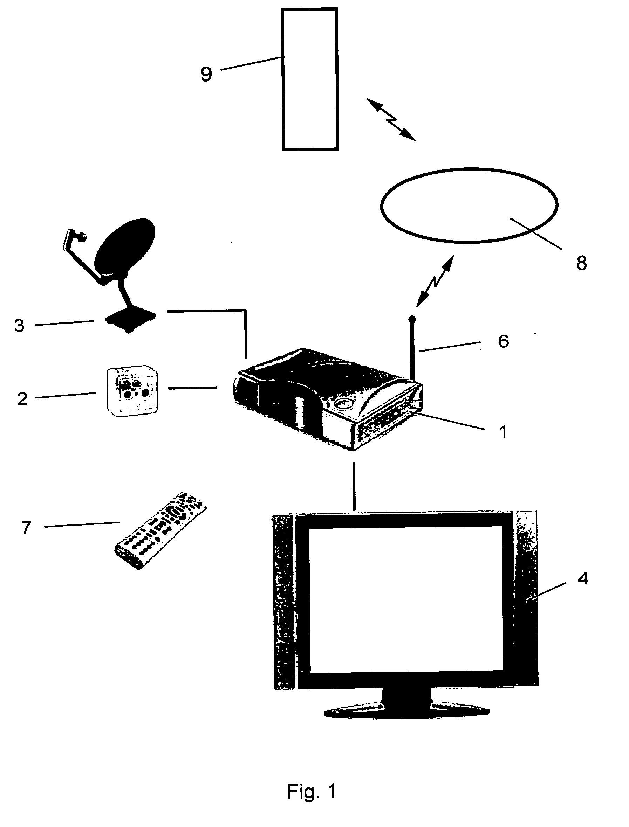

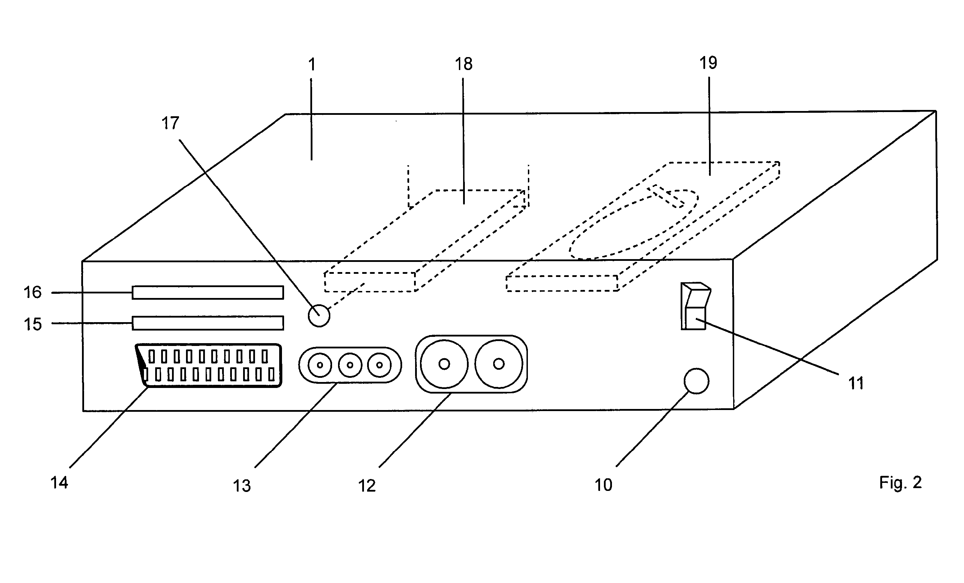

Die Erfindung wird nachfolgend anhand eines in der Zeichnung schematisch dargestellten Ausführungsbeispiels näher erläutert. In dieser zeigen Fig.1 eine Anordnung zur Abwicklung von Zusatzdiensten für Fernsehzuschauer und Fig. 2 die erfindungsgemäße Fernsehempfangs- und aufnahmevorrichtung.

In Fig. 1 ist ein digitaler Videorecorder 1 dargestellt mit einem Empfänger für Fernsehprogramme, wobei der Videorecorder 1 beispielsweise an einen Kabelfernseh-Anschluss 2 oder eine Satellitenantenne 3 angeschlossen werden kann. Die Fernsehprogramme können demnach beispielsweise über digitale Satelliten (DVB-S) oder analoges Kabel empfangen werden. Die Verbindung zum Fernsehgerät 4 erfolgt über standardisierte Schnittstellen, wie beispielsweise über Scart- oder ein Video-Cinch-Kabel. Für den Empfang und/oder das Senden von Daten, beispielsweise zum Empfangen einer elektronischen Programmzeitschrift, ist eine GSM/GPRS-Schnittstelle 6 vorgesehen. Die Bedienung erfolgt über eine Fernbedienung 7 oder nicht näher dargestellte Tasten an der Vorderseite des Videorecorders 1. Der Videorecorder 1 verfügt über ein grafisches Benutzerinterface, das am Fernsehgerät 4 angezeigt werden kann. Die ausgewählten Fernsehsendungen werden automatisch aufgenommen und auf einer internen Festplatte abgespeichert. Diese Aufnahmen können in der Folge vom Videorecorder 1 abgespielt werden.

Der Videorecorder 1 kann über das GSM-Netz 8 unter Verwendung von GPRS eine Verbindung gegebenenfalls über das Internet mit einer zentralen Recheneinheit 9 aufnehmen und Daten mit der zentralen Recheneinheit 9 austauschen. Diese Daten können beispielsweise Informationen für die elektronische Programmzeitschrift sein oder Softwareupdates, wie beispielsweise neue Versionen der Firmware, Applikationssoftware und dergleichen.

Fig. 2 zeigt den Videorecorder 1 und insbesondere die rückseitigen Anschlüsse des Videorecorders 1, wobei mit 10 ein Netzanschluss und mit 11 ein Ein/Aus-Schalter bezeichnet ist. Der Anschluss für den Fernsehempfang ist mit 12 bezeichnet und besteht bei der Version für analogen Empfang aus 2 Coax- oder Antennensteckern und bei der Version für Sattelitenempfang aus 2 F-Buchsen. Das Signal, welches von der Anzeigevorrichtung 4 angezeigt werden soll, wird beispielsweise über einen Scart-Anschluss 14 oder über Cinch-Buchsen 13 ausgegeben, wobei zwei davon Audio-Buchsen und eine davon eine Video-Buchse sein kann. Es sind aber auch andere Anschlüsse wie VGA, HDMI, S-VIDEO, DVI oder dergleichen vorstellbar. Mit 15 ist ein Smart-Card-Slot und mit 16 ein CI-Slot bezeichnet. Der eingebaute GSM-Sender/Empfänger ist strichliert mit 18 angedeutet und kann über die Buchse 17 mit einer externen GSM-Antenne verbunden werden. Eine interne Festplatte ist mit 19 bezeichnet.

Im Fernsehmodus verhält sich der digitale Videorecorder 1 wie ein gewöhnlicher Fernseher. Es können alle verfügbaren Fernsehkanäle gesehen werden. Der Videorecorder 1 besitzt eine so genannte Time-Shifting Funktion. Diese Funktion erlaubt es dem Benutzer, die aktuelle Fernsehsendung durch Drücken einer Taste anzuhalten. Der Videorecorder startet dabei automatisch eine Aufnahme des aktuellen Kanals im Hintergrund und stellt ein Standbild des aktuellen Kanals dar. Wenn die Taste erneut gedrückt wird, setzt der digitale Videorecorder mit der Fernsehsendung an der pausierten Stelle fort, während im Hintergrund weiterhin das aktuelle Programm aufgezeichnet wird. Der Benutzer kann mit Hilfe der Fernbedienung durch die aufgenommene Sendung navigieren und so z.B. Werbungen überspringen.

Der Videorecorder 1 kann die über digitalen Satelliten oder über analoges Kabel empfangenen Fernsehprogramme aufnehmen. Die Programme werden beispielsweise im MPEG2-Format auf die interne Festplatte gespeichert. Eine Aufnahme kann durch zwei Arten ausgelöst werden:
- Durch eine programmierte Aufnahme: Der Videorecorder kann programmiert werden, so dass er zu einem Datum und Uhrzeit automatisch einen bestimmten Kanal aufzeichnet. Dies beinhaltet, dass der Videorecorder in der Lage ist, rechtzeitig aus dem Standby-Modus zu erwachen, die Sendung aufzunehmen und danach wieder in den Standby-Modus zu wechseln.
- Durch den Benutzer: Durch Drücken einer Taste kann der Benutzer den aktuell ausgewählten Kanal aufnehmen.

Der Videorecorder kann über die elektronische Programmzeitschrift programmiert werden. Die programmierten Sendungen werden vom Videorecorder automatisch aufgezeichnet.

Der Videorecorder kann auf die Festplatte aufgenommene Sendungen abspielen. Während eine aufgenommene Sendung abgespielt wird, kann im Hintergrund eine andere Sendung aufgezeichnet werden. Folgende Funktionen werden während der Wiedergabe unterstützt:
- Play:: Spielt eine Sendung in normaler Geschwindigkeit ab.
- Stop:: Unterbricht das Abspielen einer Sendung.
- Schnelllauf:: Die Abspielgeschwindigkeit kann durch mehrmaliges Drücken der Schnelllauf-Taste auf 2-, 4-, 8-, 32- und 128-fach erhöht werden.
- Rücklauf:: Die Wiedergabe kann rückwärts erfolgen. Durch mehrmaliges Drücken der Rücklauf-Taste kann die Geschwindigkeit auf 2-, 4-, 8-, 32- und 128-fach erhöht werden.
- Pause:: Hält die Wiedergabe an. Ein Standbild wird ausgegeben.
- Skip Foreward/Backward 30s:: Es können 30 Sekunden in beide Abspielrichtungen übersprungen werden.

Die Wiedergabe unterstützt die Auswahl verschiedener Tonspuren und die Einstellung der Lautstärke mit Hilfe der Fernbedienung.

Der Videorecorder besitzt folgende Eingangsschnittstellen:
- Spannungsversorgungsbuchse IEC 60320 C7 zum Anschluss eines Kleingerätekabels,
- Ein/Aus Schalter auf der Rückseite zum Trennen des Netzteiles von der Versorgungsspannung,
- Fernsehempfang: Die Version für digitalen Satellitenempfang besitzt zwei Buchsen mit Gewinde (F-Buchse) zum Anschluss des Kabels von der Satelliten-Schüssel (LNBin) und zum Anschluss von weiteren Geräten nach dem Videorecorder (LNB-out). Die Version für analogen Kabelempfang besitzt eine Coax-Buchse zum Anschluss des Antennenkabels und eine Coax-Buchse, an die weitere Geräte angeschlossen werden können,
- Ein Smart-Card-Slot zum Einführen einer Chipkarte zum Entschlüsseln von Cryptoworks,
- Ein CI-Slot zum Einführen eines externen CAM Moduls,
- Infrarot Sensor für die Fernbedienung,
- Sieben Taster auf der Vorderseite (up/down, left/right, ok/escape, stand-by) zum Steuern des Videorecorders ohne Fernbedienung).

Der Videorecorder verfügt über folgende Ausgangsschnittstellen:
- Einen Scart-Sockel zum Verbinden des Videorecorders mit dem Fernsehgerät,
- Einen Video Cinch- sowie zwei Audio Cinch-Buchsen (links/rechts) für eine alternative Verbindungsart zum Fernsehgerät,
- Ein Antennen-Stecker zum Anschluss einer GSM-Antenne. Es kann eine GSM-Antenne mit Verlängerungskabel angeschlossen werden, um den Empfang zu verbessern,
- Eine visuelle Darstellung des aktuellen Betriebszustandes über eine Leuchtdiode.

Die Hauptplatine besteht aus einer Leiterplatte und weist einen Prozessor auf. Auf der Platine befindet sich ein RAM-Speicher. Die Platine verfügt über einen IDE Stecker zum Anschluss einer 3,5" Festplatte mit einer Kapazität von bis zu 500 GB. Die Festplatte kann über die Hauptplatine in den Ruhezustand versetzt und wieder aufgeweckt werden. Die Hauptplatine verfügt über einen Flash Speicher, der das komplette Betriebssystem sowie die Applikationssoftware enthält. Der Flash Speicher kann über die Hauptplatine beschrieben werden, um ein Software Update durchführen zu können. Die Platine besitzt ein GSM/GPRS Modul, um eine Verbindung zum Internet aufbauen zu können. Die SIM-Karte für die GSM-Verbindung kann in einen SIM-Karten-Halter eingesetzt werden. Es befindet sich eine Uhr auf der Platine, die per Software über GSM/GPRS eingestellt werden kann.

Der Videorecorder verfügt weiters über eine interne Festplatte mit einer Größe von 250 GB. Die Größe richtet sich in der Analog-Kabelversion nach der verwendeten Bitrate des MPEG2 Encoders und im Fall der Satellitenversion nach den empfangenen MPEG2-Streams und bietet eine minimale Kapazität von 200 Stunden.

## Patentansprüche

1. Vorrichtung zum Aufnehmen von Videoinhalten, insbesondere Fernsehsendungen, und gleichzeitigen oder zeitversetzten Wiedergeben der aufgenommenen Videoinhalte, insbesondere digitaler Videorekorder, umfassend wenigstens einen Empfänger für Videosignale, einen Speicher für die empfangenen und ggf. konvertierten und/oder digitalisierten Videosignale und eine Wiedergabeeinrichtung zum Wiedergeben der gespeicherten Videosignale, weiters umfassend eine von dem wenigstens einen Empfänger für Videosignale gesonderte Kommunikationsschnittstelle zum Empfangen und/oder Senden von Daten, wie z.B. Programminformationen, und eine programmierbare Steuervorrichtung zum Auslösen und/oder Beenden einer Aufnahme und/oder einer Wiedergabe in Abhängigkeit von Benutzereingaben, **dadurch gekennzeichnet, dass** die Kommunikationsschnittstelle als Kommunikationsschnittstelle (6) eines Mobilfunknetzes (8) ausgebildet ist und einen Speicher, insbesondere ein Teilnehmeridentifikationsmodul (SIM-Karte) des Mobilfunknetzes (8), für eine Benutzer- oder Gerätekennung aufweist.

2. Vorrichtung nach Anspruch 1, **dadurch gekennzeichnet, dass** die Kommunikationsschnittstelle (6) zum Empfangen bzw. Versenden von Daten unter Verwendung des GSM-, GPRS-, HSDPA- oder UMTS-Standards ausgebildet ist.

3. Vorrichtung nach Anspruch 1 oder 2, **dadurch gekennzeichnet, dass** die Kommunikationsschnittstelle (6) zur paketvermittelten Datenübertragung ausgebildet ist.

4. Vorrichtung nach Anspruch 1, 2 oder 3, **dadurch gekennzeichnet, dass** die Kommunikationsschnittstelle (6) zum Empfangen von Programminformationen ausgebildet ist und mit einem Programmspeicher zum Speichern der Programminformationen verbunden ist.

5. Vorrichtung nach einem der Ansprüche 1 bis 4, **dadurch gekennzeichnet, dass** der Programmspeicher mit Mitteln zum Kennzeichnen von Programmeinträgen des Programmspeichers verbunden ist und mit der programmierbaren Steuervorrichtung zum Auslösen und/oder Beenden einer Aufnahme wenigstens einer einem **gekennzeichnet**en Programmeintrag entsprechenden Fernsehsendung zusammenwirkt.

6. Vorrichtung nach einem der Ansprüche 1 bis 5, **dadurch gekennzeichnet, dass** die Kommunikationsschnittstelle (6) mit einem Zeitglied verbunden ist, um den Datenaustausch zu definierbaren Zeiten auszulösen.

7. Vorrichtung nach einem der Ansprüche 1 bis 6, **dadurch gekennzeichnet, dass** die Kommunikationsschnittstelle (6) zum Empfangen von Textnachrichten (SMS-Dienst) ausgebildet ist, wobei der Datenaustausch bei Erhalt einer Nachricht definierten Inhalts ausgelöst wird.

8. Vorrichtung nach einem der Ansprüche 1 bis 7, **dadurch gekennzeichnet, dass** ein Speicher zum Aufzeichnen von Benutzereingaben und/oder von der Steuervorrichtung ausgelösten Vorgängen vorgesehen ist, dessen Speicherinhalt über die Kommunikationsschnittstelle (6) versendet wird.

9. Vorrichtung zur Abwicklung von Zusatzdiensten für Fernsehzuschauer, **gekennzeichnet durch** wenigstens eine Fernsehempfangs- und -aufnahmevorrichtung (1) nach einem der Ansprüche 1 bis 8 sowie eine zentrale Recheneinrichtung (9), wobei die Kommunikationsschnittstelle (6) der Fernsehempfangs- und - aufnahmevorrichtung (1) zum Datenaustausch mit der zentralen Recheneinrichtung (9) ausgebildet ist.

10. Vorrichtung nach Anspruch 9, **dadurch gekennzeichnet, dass** jeder Fernsehempfangs- und -aufnahmevorrichtung (1) eine eindeutige Teilnehmerkennung zugeordnet ist und die zentrale Recheneinrichtung (9) zum Übersenden von Daten an die der jeweiligen Teilnehmerkennung entsprechende Fernsehempfangs- und - aufnahmevorrichtung (1) über das Mobilfunknetz (8) ausgebildet ist.

11. Vorrichtung nach Anspruch 9 oder 10, **dadurch gekennzeichnet, dass** die zentrale Recheneinrichtung (9) einen zentralen Speicher für Fernsehprogramminformationen aufweist, dessen Inhalt über das Mobilfunknetz (8) an die Fernsehempfangs- und -aufnahmevorrichtung (1) übertragbar ist.

12. Vorrichtung nach Anspruch 9, 10 oder 11, **dadurch gekennzeichnet, dass** die zentrale Recheneinrichtung (9) eine zentrale Benutzerdatenbank aufweist, in welcher jeder Benutzerkennung personenspezifische Informationen, wie z.B. Adresse, Alter, Geschlecht und dgl., des jeweiligen Benutzers zugeordnet sind.

13. Vorrichtung nach einem der Ansprüche 9 bis 12, **dadurch gekennzeichnet, dass** die zentrale Recheneinrichtung (9) Mittel zum Auslesen der Benutzerkennung aus den von der Fernsehempfangs- und -aufnahmevorrichtung (1) empfangenen Daten, Mittel zum Zuordnen der empfangenen Daten zu dem jeweiligen Benutzer und den dem jeweiligen Benutzer in der Datenbank zugeordneten gespeicherten Informationen und zum Auslösen der dem Dateninhalt entsprechenden Benutzeraktion, wie. z.B. einer Produktbestellung, aufweist.
